# EUROPÄISCHE PATENTANMELDUNG

(11) **EP 0 985 831 A2**
(43) Veröffentlichungstag der Anmeldung: **15.03.2000**
(21) Anmeldenummer: 99113231.7
(22) Anmeldetag: 08.07.1999
(51) Int. Cl.: F15B 15/28

(54) **Linearantrieb**

(30) Priorität: 09.09.1998 DE 29816156 U
(71) Anmelder: Festo AG & Co, 73734 Esslingen (DE)
(72) Erfinder: Henzler, Magnus, 72663 Grossbettlingen (DE)
(74) Vertreter: Abel, Martin, Dipl.-Ing.

(57) **Zusammenfassung**

Es wird ein Linearantrieb vorgeschlagen, der ein Gehäuse (2) mit einem Innenraum (6) enthält, in dem ein Antriebsteil (7) axial bewegbar angeordnet ist. Zur berührungslosen Erfassung mindestens einer Axialposition des Antriebsteils (7) ist wenigstens ein außerhalb des Innenraumes (6) an einer Längsführung (22) relativ zum Gehäuse (2) axial verlagerbar angeordneter Sensor (15) vorgesehen. An dem Sensor (15) greift eine zur axialen Positionierung dienende Betätigungseinrichtung (27) an, die über ein von außen her zugängliches Bedienelement (28) verfügt. Das Bedienelement (28) ist im Bereich einer längsseitigen Seitenfläche (32) des Gehäuses (2) vorgesehen und steht über eine Getriebeeinrichtung (33) mit dem Sensor (15) in Verbindung.

## Beschreibung

Die Erfindung betrifft einen Linearantrieb, mit einem Gehäuse, das einen Innenraum enthält, in dem ein Antriebsteil axial bewegbar angeordnet ist, mit wenigstens einem außerhalb des Innenraumes an einer Längsführung relativ zum Gehäuse axial verlagerbar angeordneten Sensor zur berührungslosen Erfassung mindestens einer Axialposition des Antriebsteils, und mit einer an dem Sensor angreifenden und zu dessen axialer Positionierung relativ zum Gehäuse dienenden Betätigungseinrichtung, die über ein von außen her zugängliches Bedienelement verfügt.

Ein Linearantrieb dieser Art geht aus der WO 91/14871 hervor. Es handelt sich dort um einen fluidbetätigten Arbeitszylinder, dessen Gehäuse über einen längsverlaufenden Kanal verfügt, der einen oder mehrere Sensoren aufnimmt, die zur Erfassung der Axialposition des Kolbens dienen. Die Axialposition jedes Sensors ist durch eine Betätigungseinrichtung einstellbar, welche aus einer am betreffenden Sensor festgelegten Stange besteht, die an der Stirnfläche des Gehäuses mit einer ein Bedienelement bildenden Endpartie herausragt. Durch manuelles Verschieben der Stange läßt sich die Axialposition des jeweils zugeordneten Sensors variieren.

Bei dem bekannten Linearantrieb besteht das Problem, daß sich eine exakte Positionierung der Sensoren nur durch sehr zeitraubende Justierarbeiten durchführen läßt. Ein feinfühliges Justieren ist kaum möglich. Darüberhinaus sind die aus dem Zylinder herausragenden Stangen der Betätigungseinrichtungen sehr hinderlich und machen überdies Nachjustierungen während des Betriebes des Linearantriebes praktisch unmöglich, da hierzu in den Arbeitsbereich des Linearantriebes eingegriffen werden müßte.

Zwar geht aus der DE 196 24 233 C1 bereits eine Vorrichtung zur linearen Wegaufnahme hervor, die unter Vermittlung einer Gewindespindel eine genauere Justierung eines Sensors ermöglicht. Auch hier besteht allerdings das Problem, daß zur Betätigung der Gewindespindel in den der Anordnung axial vorgelagerten Arbeitsbereich eingegriffen werden muß, so daß sich Nachjustierungen während des Betriebes wegen der Gefahrensituation nicht empfehlen.

Es ist die Aufgabe der vorliegenden Erfindung, einen Linearantrieb der eingangs genannten Art zu schaffen, der gefahrlos eine sehr exakte axiale Positionierung eines Sensors ermöglicht.

Zur Lösung dieser Aufgabe ist vorgesehen, daß das Bedienelement im Bereich einer längsseitigen Seitenfläche des Gehäuses vorgesehen ist und über eine Getriebeeinrichtung mit dem Sensor in Verbindung steht.

Somit ist unter Vermittlung der Getriebeeinrichtung, die mit einer bedarfsgemäßen Übersetzung ausgestattet sein kann, eine sehr exakte und feinfühlige Justierung des betreffenden Sensors möglich. Dazuhin befindet sich das Bedienelement im Bereich einer längsseitigen Seitenfläche des Gehäuses, so daß auch dann gefahrlos Nachjustierungen vorgenommen werden können, wenn sich der Linearantrieb im Betrieb befindet. In diesem Zusammenhang gestattet die Getriebeeinrichtung eine problemlose Umlenkung des Kraftflusses vom seitlich angeordneten Bedienelement zu dem axial weiter entfernt angeordneten Sensor.

Vorteilhafte Weiterbildungen der Erfindung gehen aus den Unteransprüchen hervor.

Das Bedienelement ist zweckmäßigerweise als zu einer Betätigung drehbares Element ausgeführt und kann von einem drehbar gelagerten Radkörper gebildet sein, dessen Drehachse parallel zur Längsachse des Gehäuses verläuft. Bei dieser sehr platzsparenden Ausführungsform läßt sich durch Verdrehen des Bedienelementes eine exakte Positionierung des über die Getriebeeinrichtung angekoppelten Sensors bewirken.

Um Beschädigungen oder ungewolltes Verstellen zu verhindern, kann das Bedienelement wenigstens teilweise und vorzugsweise zumindest größtenteils oder vollständig versenkt in der zugeordneten Seitenfläche angeordnet sein.

Eine besonders exakte Positionierung ist möglich, wenn die Getriebeeinrichtung eine Gewindespindel enthält, die zweckmäßigerweise drehtest mit dem Bedienelement verbunden ist und andererseits mit einem sensorfesten Körper in Gewindeeingriff steht, welcher letztere bezüglich dem Gehäuse unverdrehbar fixiert ist, so daß aus einem Verdrehen der Gewindespindel eine axiale Verlagerung des Sensors resultiert. Durch Auswahl einer geeigneten Gewindesteigung kann hier problemlos die Übersetzung vorgegeben werden, wobei man zweckmäßigerweise auf ein Feingewinde zurückgreift, um die gewünschte Axialposition sehr genau einstellen zu können. Der sensorfeste Körper kann beispielsweise von einem separaten Halter oder unmittelbar vom Sensorgehäuse gebildet sein.

Der Sensor und die zugeordnete Getriebeeinrichtung sind zweckmäßigerweise versenkt in einem Gehäusekanal aufgenommen, der vor allem dann einen besonders guten Schutz gegen Verschmutzung bietet, wenn er umfangsseitig geschlossen ist und sich im Innern der Gehäusewandung erstreckt. Der Sensor mit Getriebeeinrichtung kann auf diese Weise vollständig im Gehäuse integriert werden.

Als besonders zweckmäßig wird angesehen, das Bedienelement in der Nähe eines axialen Endbereiches des Gehäuses zu installieren und insbesondere an einem dort vorgesehenen Abschlußdeckel des Gehäuses.

Um beim Justieren eines Sensors das Mitbewegen von Kabeln zu vermeiden, ist vorzugsweise eine gehäusefest fixierte Leiterbahnanordnung vorhanden, die sich parallel zum Verstellweg des jeweils zugeordneten Sensors erstreckt und mit der der Sensor über Schleifkontakte in Berührkontakt steht. Durch Verbindung der Leiterbahnanordnung mit einer Auswerte- und/oder Steuereinrichtung können die erhaltenen Sensorsignale sehr bequem ausgewertet und als Basis für die Steuerung weitergehender Betriebsabläufe herangezogen werden.

Es wäre denkbar, die Auswerte- und/oder Steuereinrichtung unmittelbar in den Linearantrieb zu integrieren oder an diesen anzusetzen. Auf jeden Fall empfiehlt sich eine lösbare Verbindung über geeignete Schnittstellenmittel, so daß bei Bedarf ein rascher Austausch möglich ist.

Die Leiterbahnanordnung ist zweckmäßigerweise Bestandteil einer gehäusefest fixierten länglichen Leiterplatte, so daß eine einfache Montage möglich ist. Sind der oder die Sensoren in einem Gehäusekanal untergebracht, kann auch die Leiterplatte in diesem Gehäusekanal installiert werden.

Vorzugsweise befindet sich die Leiterbahnanordnung auf der dem Innenraum des Gehäuses zugewandten Seite des Sensors, wobei sie dem Sensor zugewandt ist, so daß dieser in einfacher Weise mit den Leiterbahnen kontaktiert werden kann. Gleichzeitig ist auf diese Weise auch eine einfache Kontaktierung mit einer Auswerte- und/oder Steuereinrichtung möglich. Ist die Leiterbahnanordnung Bestandteil einer Leiterplatte, befindet sich letztere auf der dem Innenraum des Gehäuses zugewandten Seite des Sensors, wobei die Leiterbahnanordnung auf der dem Sensor zugewandten Seite der Leiterplatte vorgesehen ist.

Um die vorgenommene Einstellung der Sensorposition vor einem ungewollten Verstellen zu sichern, sind zweckmäßigerweise geeignete Sicherungsmittel vorhanden, die eine Fixierung der jeweiligen Einstellung bewirken. Die Sicherungsmittel können beispielsweise ganz oder teilweise von einem Gewindeeingriff zwischen der Getriebeeinrichtung und einem sensorfesten Körper gebildet sein, wobei die Gewindesteigung so gewählt wird, daß eine Selbsthemmung vorliegt. Möglich wären aber beispielsweise auch unmittelbar zwischen dem Bedienelement und dem Gehäuse des Linearantriebes wirkende Mittel, beispielsweise Elastomermittel, die vorzugsweise auch eine Dichtfunktion zum Verhindern des Eindringens von Verunreinigungen übernehmen können.

Der Linearantrieb kann mit mehreren Sensoren ausgestattet sein, denen jeweils eine eigene Betätigungseinrichtung zugeordnet ist. Es bietet sich beispielsweise an, den beiden Hubendlagen des Antriebsteils jeweils einen Sensor mit Betätigungseinrichtung zuzuordnen.

Der Linearantrieb kann beispielsweise von elektrisch und/oder fluidisch betriebener Bauart sein. Ferner sind Bauformen mit und ohne Kolbenstange möglich. Die Erregung der Sensoren erfolgt zweckmäßigerweise durch eine am Antriebsteil vorgesehene Schalteinrichtung, die insbesondere als Dauermagneteinrichtung ausgeführt sein kann, welche ein von einem Magnetfeld gebildetes Schaltsignal erzeugt, das den Sensor beim Passieren betätigt, so daß dieser ein weiterverwertbares Signal hervorruft.

Nachfolgend wird die Erfindung anhand der beiliegenden Zeichnung näher erläutert. In dieser zeigen:
- Figur 1: eine bevorzugte Bauform des erfindungsgemäßen Linearantriebes in perspektivischer Darstellung und teilweise aufgebrochen,
- Figur 2: einen Längsschnitt durch den Linearantrieb gemäß Schnittlinie II-II aus Figuren 1 und 3 in Teildarstellung, und
- Figur 3: einen Querschnitt durch den Linearantrieb gemäß Schnittlinie III-III aus Figuren 1 und 2, wiederum in Teildarstellung.

Der in der Zeichnung dargestellte und insgesamt mit Bezugsziffer 1 bezeichnete Linearantrieb ist beispielhaft als fluidbetätigter Linearantrieb ausgeführt, der sich auch als Arbeitszylinder bezeichnen ließe und der mit einem fluidischen Druckmedium, insbesondere mit Druckluft, betrieben wird. Andere Bauformen sind aber ebenfalls denkbar, so beispielsweise elektrisch durch einen Elektromotor betriebene.

Der Linearantrieb 1 verfügt über ein längliches Gehäuse 2 mit an sich beliebiger Außenkontur, wobei sich der beim Ausführungsbeispiel vorhandene rechteckige und insbesondere quadratische Querschnitt als vorteilhaft erwiesen hat.

Das Gehäuse 2 umfaßt einen Rohrkörper 3 und zwei im Bereich dessen Stirnseiten angeordnete und beispielsgemäß stirnseitig aufgesetzte Abschlußdeckel 4, 5. Letztere sind durch geeignete Befestigungsmittel wie Schrauben oder Zuganker am Rohrkörper 3 festgelegt.

Im Innern des Gehäuses 2 ist ein länglicher und zweckmäßigerweise zylindrisch konturierter Innenraum 6 ausgebildet, der umfangsseitig vom Rohrkörper 3 und axialseitig durch die beiden Abschlußdeckel 4, 5 begrenzt ist. In ihm befindet sich ein axial verschiebbares Antriebsteil 7, das bei der gezeigten Ausgestaltung als Arbeitszylinder über einen Kolben 9 verfügt. Dieser weist am Außenumfang eine nicht näher dargestellte ringförmige Dichtungseinrichtung auf, so daß er den Innenraum 6 axial in zwei Arbeitsräume 8, 8' unterteilt. Jeder Arbeitsraum 8, 8' kommuniziert mit einem zugeordneten, andererseits außen am Gehäuse 2 ausmündenden Fluidkanal 12, 12'.

Eine mit dem Kolben 9 fest verbundene Kolbenstange 13 des Antriebsteils 7 verläuft koaxial zum Gehäuse 2 und durchsetzt unter Abdichtung den einen Abschlußdeckel 4, der nachstehend als vorderer Abschlußdeckel bezeichnet sei. Am außerhalb des Gehäuses 2 befindlichen Längenabschnitt der Kolbenstange 3 läßt sich über nicht näher gezeigte Befestigungsmittel ein beliebiger zu bewegender Gegenstand anbringen.

Durch aufeinander abgestimmte Zufuhr und/oder Abfuhr von Druckmedium bezüglich der Arbeitsräume 8, 8' über die Fluidkanäle 12, 12' läßt sich das Antriebsteil 7 zu einer Linearbewegung in der einen oder anderen axialen Richtung veranlassen. Diese kann an der Kolbenstange 13 oder einem sonstigen von außen her zugänglichen Abtriebsteil abgenommen werden.

Der Linearantrieb 1 verfügt über eine allgemein mit Bezugsziffer 14 bezeichnete Positionserfassungseinrichtung, die es ermöglicht, eine oder mehrere relative Axialpositionen des Antriebsteils 7 mit Bezug zum Gehäuse 2 zu erfassen. Das Ausführungsbeispiel ist so ausgelegt, daß eine Erfassung zweier Axialpositionen möglich ist und verfügt zu diesem Zweck über zwei Sensoren 15, die außerhalb des Innenraumes 6 in der radialen Nachbarschaft dessen Umfanges angeordnet sind. Ihre Betätigung erfolgt berührungslos durch eine am Antriebsteil 7 vorgesehene Schalteinrichtung 16, die beim Ausführungsbeispiel von einer Permanentmagneteinrichtung gebildet ist, welche am Kolben 9 im Bereich dessen Außenumfanges fixiert ist. Die Schalteinrichtung 16 erzeugt ständig ein vorliegend vom Magnetfeld der Dauermagneteinrichtung gebildetes Schaltsignal, das einen Sensor 15 erregt, wenn der Kolben 9 in eine dem betreffenden Sensor 15 radial innen gegenüberliegende Axialposition gelangt. Die Sensoren 15 des Ausführungsbeispiels sind von sogenannten Reed-Schaltern gebildet, die durch das Magnetfeld geschlossen werden und dadurch ein Sensorsignal hervorrufen, das in einer schematisch angedeuteten Auswerte- und/oder Steuereinrichtung 17 verarbeitet werden kann.

Prinzipiell könnten die Sensoren 15 auch auf einem anderen Arbeitsprinzip beruhen und beispielsweise von Induktiv-Sensoren gebildet sein.

Die beiden Sensoren 15 sind beispielsgemäß jeweils an einem Halter 18 fixiert und über diesen an einer außerhalb des Innenraumes 6 befindlichen gehäusefesten Längsführung 22 relativ zum Gehäuse 2 axial verschiebbar geführt. Beim Ausführungsbeispiel ist die Längsführung 22 unmittelbar von einem radial außerhalb des Innenraumes 6 in der Wandung des Gehäuses 2 verlaufenden, sich parallel zur Längsachse 23 des Innenraumes 6 erstreckenden Gehäusekanal 24 gebildet, in dem die Sensoren 15 einschließlich ihrer Halter 18 geschützt untergebracht sind. Der Gehäusekanal 24 ist, abgesehen von einer noch zu erläuternden Anschlußöffnung 25, umfangsseitig geschlossen und erstreckt sich zweckmäßigerweise über die gesamte Länge des Rohrkörpers 3, an dessen beiden Stirnseiten er zum axial vorgeschalteten Abschlußdeckel 4, 5 hin ausmündet. Die Kanalmündungen sind durch die Abschlußdeckel 4, 5 überdeckt.

Die axiale Verschiebeführung der Sensoren 15 erfolgt durch eine an die Innenkontur des Gehäusekanals 24 angepaßte Formgebung der Außenkontur des jeweils zugeordneten Halters 18, die so ausgeführt ist, daß sich eine zwar axial verschiebbare, gleichzeitig aber winkelmäßig fixierte und unverdrehbare Abstützung ergibt. Im Bereich der Außenfläche der Halter 18 können insbesondere von Vorsprüngen gebildete Stützpartien 26 vorgesehen sein, die sich an der Innenfläche der Wandung des Gehäusekanals 24 abstützen und dadurch für eine sichere Lagerung sorgen. Sie bestehen zweckmäßigerweise, wie der Halter 18 insgesamt, aus Kunststoffmaterial. Die Sensoren 15 können in den zugeordneten Halter 18 ganz oder teilweise eingebettet sein, so daß der Halter 18 eine Art Gehäusefunktion übernehmen kann.

Der axial durchgehende Gehäusekanal 24 läßt sich sehr einfach bei einer Strangpreßfertigung des Rohrkörpers 3 einformen. Im übrigen wäre es durchaus denkbar, mehrere derartige Gehäusekanäle 24 über den Umfang des Innenraumes 6 verteilt vorzusehen, die alternativ oder gleichzeitig mit einem oder mehreren Sensoren ausgestattet sein können.

Jedem Sensor 15 ist eine Betätigungseinrichtung 27 zugeordnet, durch die er stufenlos in einer gewünschten Axialposition in dem Gehäusekanal 24 positioniert werden kann. Das Einstellen erfolgt über ein von außen her zugängliches Bedienelement 28 der Betätigungseinrichtung 27. Jedem Sensor 15 ist eine eigene Betätigungseinrichtung 27 zugeordnet, wobei sich die nachstehende Beschreibung in Folge der identischen Ausgestaltung an der dem vorderen Abschlußdeckel 4 zugeordneten Betätigungseinrichtung 27 orientiert.

Im einzelnen ist vorgesehen, daß das Bedienelement 28 im Bereich einer längsseitigen Seitenfläche 32 des Gehäuses 2 vorgesehen ist und sich daher bequem von der Seite des Linearantriebes 1 her betätigen läßt. Es ist insbesondere nicht erforderlich, zum Einstellen der Axialposition eines Sensors in den dem vorderen Abschlußdeckel 4 axial vorgelagerten Arbeitsbereich des Linarantriebes 1 zu fassen.

Eine jeweilige Betätigungseinrichtung 27 verfügt ferner über eine die Verbindung zwischen dem Bedienelement 28 und dem Sensor 15 herstellende Getriebeeinrichtung 33. Sie gestattet ein sehr feinfühliges Justieren des betreffenden Sensors.

Beim Ausführungsbeispiel enthält die Getriebeeinrichtung 33 eine sich längs in dem Gehäusekanal 24 erstreckende Gewindespindel 34, die mit einem sensorfesten Körper in Gestalt des Halters 18 in Gewindeeingriff steht. Letzterer enthält eine in Längsrichtung des Gehäusekanals 24 durchgehende Durchbrechung 35, die ein Innengewinde aufweist und die von der Gewindespindel 34 durchsetzt wird, welche dabei mit ihrem Außengewinde mit dem Innengewinde der Durchbrechung 35 in Schraubeingriff steht.

Ein axialer Endbereich der Gewindespindel 34 steht in drehfester Verbindung mit dem Bedienelement 28, welches vorliegend dem axialen Endbereich des Gehäuses 2 zugeordnet ist und sich insbesondere an oder in einem der Abschlußdeckel 4, 5 befindet.

Bevorzugt handelt es sich bei dem Bedienelement 28 wie abgebildet um ein zu seiner Betätigung drehbares Element, das vorzugsweise als Stellrad oder Radkörper ausgeführt ist und das mit einer zur Längsachse 23 des Gehäuses 2 parallelen Drehachse 36 bezüglich dem Gehäuse 2 drehbar gelagert ist. Es kann sich um ein mit der Gewindespindel 34 einstückig ausgebildetes Teil handeln, beim Ausführungsbeispiel liegt aus Fertigungsgründen allerdings eine getrennte Ausführung vor, wobei das Bedienelement 28 drehfest auf die Gewindespindel 34 aufgesteckt ist.

Im einzelnen verfügt das Gehäuse 2 über eine in die besagte längsseitige Gehäusefläche 32 eingelassene und beispielsweise nutähnliche Vertiefung 37, in die das radförmige Bedienelement 28 von der Seite her eingesetzt ist. Dabei befindet sich ein einen Bedienabschnitt 38 bildender Teilumfangsbereich des Bedienelementes 28 im Bereich der in der längsseitigen Gehäusefläche 32 liegenden Öffnung 42 der Vertiefung 37 und ist somit zur manuellen Bedienung zugänglich. Dabei ist das Bedienelement 28 wenigstens teilweise und zweckmäßigerweise annähernd vollständig in das Gehäuse 2 eingelassen, so daß der Bedienabschnitt 28 nicht oder nur geringfügig über die als längsseitige Gehäusefläche 32 bezeichnete längsseitige Seitenfläche des Gehäuses 2 vorsteht. Die Drehbetätigung des Bedienelementes 28 ist bequem mit dem Finger einer Hand möglich.

Bevorzugt ist die Vertiefung 37 in dem zum vorderen Abschlußdeckel 34 gehörenden Seitenflächenabschnitt der längsseitigen Gehäusefläche 32 ausgenommen. Ein Verbindungskanel 43 durchsetzt dabei axial den zwischen dem Rohrkörper 3 und der Vertiefung 37 befindlichen Wandabschnitt 44 des vorderen Abschlußdeckels 4. Durch diesen Verbindungskanal 43 ist die Gewindespindel 34 von der Seite des Gehäusekanals 24 her hindurchgesteckt, um mit dem Bedienelement 28 drehfest gekoppelt zu werden.

Bei der Montage der Anordnung geht man zweckmäßigerweise so vor, daß man zunächst das Bedienelement 28 in die seitlich am Gehäuse 2 vorgesehene Vertiefung einsteckt und anschließend die zweckmäßigerweise bereits mit dem Sensor 15 bzw. dessen Halter 18 bestückte Gewindespindel 34 durch den Verbindungskanal 43 hindurch in eine zentrale Öffnung des Bedienelements 28 formschlüssig einsteckt. In diesem Zustand ragt die Gewindespindel 34 mit ihrem außerhalb des vorderen Abschlußdeckels 4 liegenden Abschnitt axial über diesen vorderen Abschlußdeckel 4 hinaus. Im nächsten Schritt wird der Rohrkörper 3 an den Abschlußdeckel 5 angesetzt, wobei der vorstehende Abschnitt der Gewindespindel 34 mitsamt dem daran angeordneten Sensor 15 und Halter 18 über die stirnseitige Öffnung des Gehäusekanals 24 in diesen eingeführt wird.

Die Montage im Bereich des anderen, rückwärtigen Abschlußdeckels 5 erfolgt in entsprechender Weise.

Der Sensor 15 läßt sich bequem dadurch axial positionieren, daß das Bedienelement 28 und somit die Gewindespindel 34 ohne Veränderung der Axialposition verdreht wird. Die Drehbewegung hat aufgrund des Gewindeeingriffes mit dem Halter 18 und aufgrund dessen unverdrehbarer Fixierung in dem die Längsführung 22 bildenden Gehäusekanal 24 eine relative axiale Verlagerung des Halters 18 mit zugeordnetem Sensor 15 relativ zum Gehäuse 2 und zur Gewindespindel 34 zur Folge. Indem die miteinander kooperierenden Gewinde als Feingewinde ausgeführt sind, wird eine Selbsthemmung erzielt, die einem versehentlichen Verändern der eingestellten Axialposition entgegenwirkt.

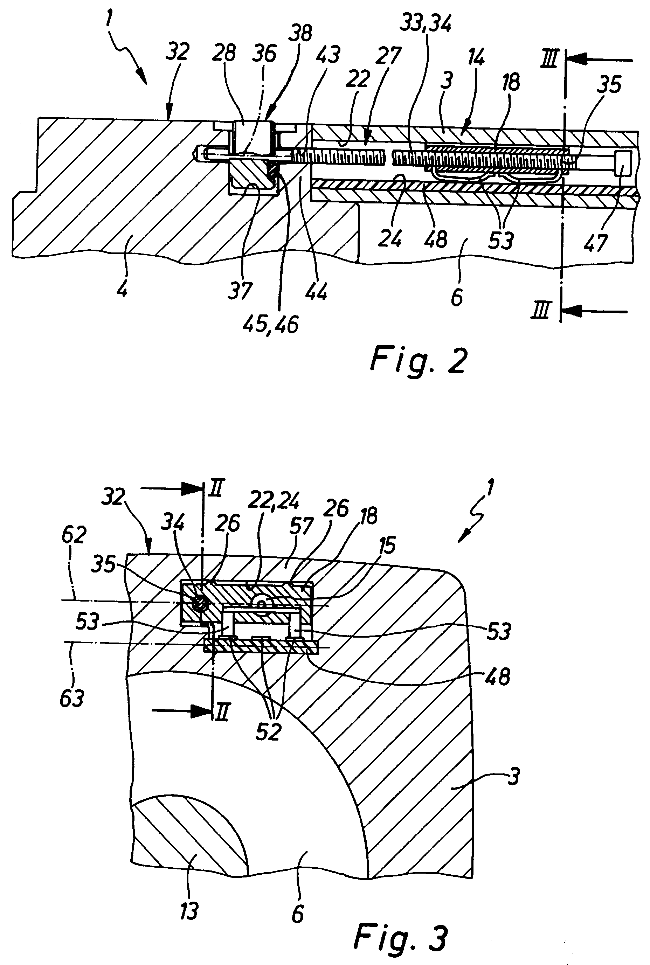

Darüberhinaus können zusätzlich oder alternativ weitere Sicherungsmittel 45 zur Fixierung der eingestellten Axialposition des Sensors 15 vorgesehen sein, wie sie exemplarisch in Figur 2 ersichtlich sind. Die dortigen Sicherungsmittel 45 sind von einem aus gummielastisch nachgiebigem Material bestehenden Ringkörper 46 gebildet, der axial zwischen dem radförmigen Bedienelement 28 und einer der axial orientierten Begrenzungswände der Vertiefung 37 plaziert ist. Er ist entweder fest mit dem Gehäuse 2 oder mit dem Bedienelement 28 verbunden und kann das Bedienelement 28 gegen die gegenüberliegende Begrenzungsfläche der Vertiefung 37 drücken, so daß durch Reibschluß eine gewisse Schwergängigkeit erzielt wird. Zweckmäßigerweise befindet sich der Ringkörper 46 im Bereich des dem Rohrkörper 3 zugewandten Wandabschnittes 44, so daß er die Öffnung des Verbindungskanals 43 umschließt und gleichzeitig eine Abdichtung bewirkt, welche das Eindringen von Verunreinigungen in den mit den Sensoren 15 bestücken Gehäusekanal 24 verhindert. Der gummielastische Ringkörper 46 kann auch nur hinsichtlich einer Dichtfunktion und ohne Sicherungsfunktion ausgelegt sein.

Der beispielsgemäße Linearantrieb 1 verfügt wie erwähnt über zwei im gleichen Gehäusekanal 24 untergebrachte und mit jeweils einer eigenen Betätigungseinrichtung 27 versehene Sensoren 15, wobei die Betätigungseinrichtungen 27 den beiden einander entgegengesetzten axialen Endbereichen des Gehäuses 2 zugeordnet sind und die Länge einer jeweiligen Getriebeeinrichtung 33 bzw. Gewindespindel 34 so gewählt ist, daß sich der zugeordnete Sensor 15 in einer Weise axial positionieren läßt, die eine Erfassung der Hubendlagen des Antriebsteils 7 ermöglicht. Die Gewindespindeln 34 können dabei an ihrem dem Bedienelement 28 axial entgegengesetzten Ende frei enden und benötigen dort nicht notwendigerweise eine Drehlagerung. Die Gewindespindel 34 kann also ausgehend vom jeweiligen Bedienelement 28 frei auskragend in den zugeordneten Gehäusekanal 24 hineinragen. Ein im Bereich des freien Endes vorgesehener Endanschlag 47, auf den der Halter 18 auflaufen kann, empfiehlt sich, um ein versehentliches Herunterschrauben des Halters 18 von der Gewindespindel 34 zu verhindern.

Ersichtlich können durch Verwendung einer verlängerten Getriebeeinrichtung 33 bzw. Gewindespindel 34 auch andere Axialpositionen des Sensors 15 eingestellt werden, die weiter vom axialen Endbereich des Gehäuses 2 entfernt sind und die sich insbesondere an beliebiger Stelle längs des Innenraumes 6 befinden können. Bei einer solchen Anwendung wird sich eine Drehlagerung der Gewindespindel 34 an dem dem Bedienelement 28 axial entgegengesetzten Endbereich empfehlen. Ferner wird man hier zur Vermeidung von Kollisionen mehrerer Betätigungseinrichtungen 26 diese gemeinsam in einem entsprechend im Querschnitt vergrößerten Gehäusekanal 24 oder in separaten Gehäusekanälen unterbringen.

Die Positionerfassungeinrichtung 14 des Ausführungsbeispiels ist vorteilhafterweise so ausgelegt, daß innerhalb des Linearantriebes 1 eine kabellose Führung der von den Sensoren 15 ausgegebenen Sensorsignale und auch einer eventuell erforderlichen Betätigungsenergie erfolgt. Zu diesem Zweck ist in dem Gehäusekanal 24 eine sich in dessen Längsrichtung und parallel zum Verstellweg der Sensoren 15 erstreckende schienen- oder leistenartige Leiterplatte 48 gehäusefest installiert, die mit einer Leiterbahnanordnung 52 versehen ist. Letztere verfügt beim Ausführungsbeispiel, dessen Sensoren 15 von Reed-Schaltern gebildet sind, über insgesamt drei Leiterbahnen, deren eine die gemeinsame Energie- bzw. Stromzufuhr zu beiden Sensoren 15 ermöglicht, während die beiden anderen Leiterbahnen jeweils mit einem der beiden Sensoren 15 kooperieren und die Übermittlung des hervorgerufenen Sensorsignals ermöglichen.

Die Leiterplatte 48 befindet sich zweckmäßigerweise auf der dem Innenraum 6 des Gehäuses 2 zugewandten Seite der Sensoren 15 und der Getriebeeinrichtung 33, wobei sich die Leiterbahnanordnung 52 an der den Sensoren 15 zugewandten Längsseite der Leiterplatte 48 befindet. Jeder Sensor 15 ist mit zwei Schleifkontakten 53 versehen, die mit Federvorspannung an den beiden zugeordneten Leiterbahnen der Leiterbahnanordnung 52 anliegen, wobei der Berührkontakt ungeachtet der eingestellten Axialposition des betreffenden Sensors 15 stets beibehalten wird.

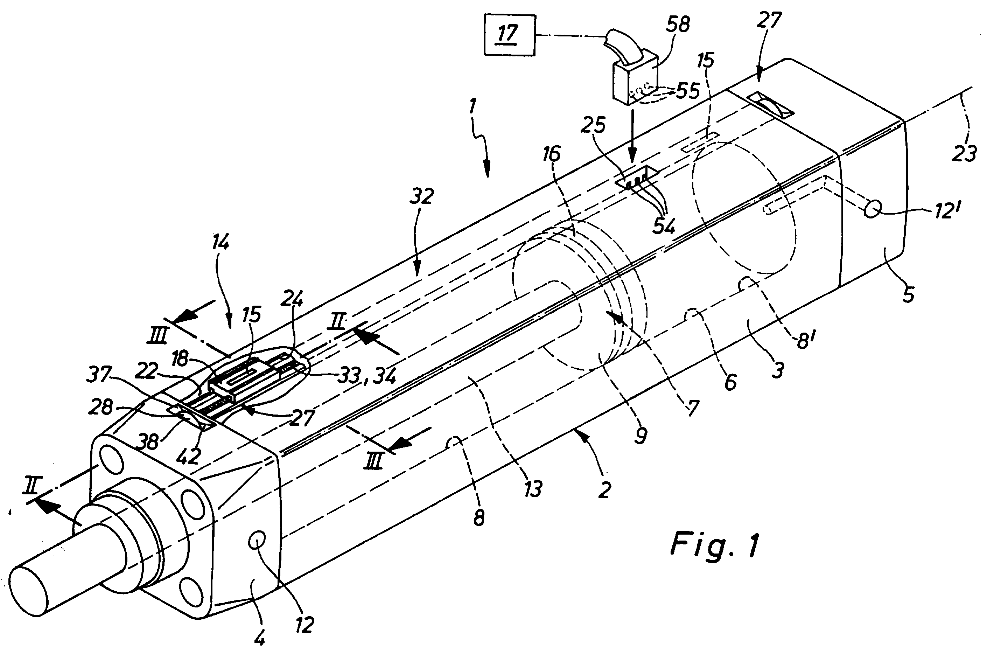

Die Leiterbahnanordnung 52 ist ferner an beliebiger Stelle ihrer Länge mit in Figur 1 schematisch angedeuteten ersten Schnittstellenmitteln 54 versehen, die eine lösbare Kontaktierung mit zweiten Schnittstellenmitteln 55 ermöglichen, welche letztere mit der schon erwähnten Auswerte- und/oder Steuereinrichtung 17 verbunden sind.

Beim Ausführungsbeispiel wird über die Auswerte- und/oder Steuereinrichtung 17 zwischen die allen Sensoren 15 gemeinsame Leiterbahn und die jedem Sensor getrennt zugeordnete Leiterbahn eine Spannung angelegt. Wird ein Sensor 15 geschaltet, schließt sich der betreffende Stromkreis, woraus ein ein Sensorsignal bildender Stromfluß resultiert, den die Auswerte- und/oder Steuereinrichtung 17 registriert. Dies kann beispielsweise für Anzeigezwecke oder zur Ansteuerung des Linearantriebes 1 selbst oder sonstiger vom Betriebszustand des Linearantriebes 1 abhängiger Komponenten herangezogen werden.

Die Schnittstellenmittel 54, 55 sind beim Ausführungsbeispiel als Steckmittel konzipiert, sie könnten aber auch beispielsweise als reine Berührkontaktmittel ausgeführt sein, letzteres insbesondere dann, wenn die ersten Schnittstellenmittel 54 unmittelbar von der Leiterbahnanordnung 52 gebildet sind.

Da die Leiterbahnanordnung 52 im Bereich der radial innenliegenden Begrenzungsfläche des Gehäusekanals 24 vorgesehen ist und dabei nach radial außen gewandt ist, läßt sich sowohl der Abgriff seitens der Sensoren 15 als auch der Abgriff seitens der Auswerte- und/oder Steuereinrichtung 17 sehr bequem vornehmen. Beide Abgriffe können von der gleichen Seite her erfolgen.

Die der Leiterbahnanordnung 52 zugeordneten ersten Schnittstellenmittel 54 befinden sich beim Ausführungsbeispiel im Bereich des Rohrkörpers 3 und dabei zweckmäßigerweise axial zwischen den beiden Sensoren 15. Sie sind über eine als Aussparung des Rohrkörpers 3 ausgebildet Anschlußöffnung 25 zugänglich, die den den Gehäusekanal 24 auf der dem Innenraum 6 radial entgegengesetzten Außenseite begrenzenden Wandabschnitt 57 des Rohrkörpers 3 durchsetzt und die sich zweckmäßigerweise an der gleichen längsseitigen Seitenfläche 32 des Gehäuses 2 befindet wie die Bedienelemente 28. Es ist nun beispielsweise möglich, ein die zweiten Schnittstellenmittel 55 aufweisendes und mit der Auswerte- und/oder Steuereinrichtung 17 in Verbindung stehendes Steckerelement 58 in die Anschlußöffnung 25 einzustecken, um die beiden Schnittstellenmittel 54, 55 lösbar miteinander zu verbinden, wobei dann gleichzeitig die Aussparung 56 dicht verschlossen wird, so daß insgesamt ein geschlossener Gehäusekanal 24 vorliegt, der keiner Verschmutzungsgefahr ausgesetzt ist.

Es versteht sich, daß anstelle der beim Ausführungsbeispiel von einem Spindeltrieb gebildeten Getriebeeinrichtung 33 auch ein anderer Getriebetyp eingesetzt werden kann. So wäre es beispielsweise denkbar, die Sensoren 15 und/oder ihre Halter 18 an einem biegeflexiblen Lochband zu fixiert, das mit einem über verzahnungsartige Vorsprünge verfügenden Zahnrad in Eingriff steht, welches mit einem drehbaren Bedienelement drehfest verbunden oder von einem solchen gebildet ist. Durch Verdrehen des Bedienelements 28 wird hierbei das Lochband durch den Verzahnungseingriff in die eine oder andere Richtung verlagert und dabei der zugeordnete Sensor im Gehäusekanal 24 zu Positionierzwecken gezogen oder verschoben.

Es wäre ferner denkbar, den die Sensoren enthaltenden Gehäusekanal 24 so auszuführen, daß die momentane Axialposition der Sensoren 15 von außen her sichtbar ist. Hierzu könnte die den Gehäusekanal 24 begrenzende Umfangswand wenigstens partiell durchsichtig ausgeführt sind. Bei Einsätzen, bei denen die Verschmutzungsproblematik keine Rolle spielt, könnte der Gehäusekanal 24 längsseits auch über seine gesamte Länge oder über wenigstens eine Teillänge offen und somit insgesamt nutartig ausgeführt sein.

Es wäre ferner denkbar, anstelle einer externen Anordnung der Auswerte- und/oder Steuereinrichtung 17 eine integrierte Bauform vorzusehen, bei der sie an das Gehäuse 2 des Linearantriebes 1 angebaut oder wenigstens teilweise im Gehäuse 2 aufgenommen ist.

Jedenfalls ermöglicht die zwischen das Bedienelement 28 und den Sensor 15 zwischengeschaltete Getriebeeinrichtung 33 eine problemlose Umlenkung des Kraftflusses von dem ausschließlich von einer Längsseite des Gehäuses 2 her zugänglichen Bedienelement 28 in die erforderliche axiale Bewegungsrichtung des zugehörigen Sensors 15. Dabei kann durch die Wahl eines geeigneten Übersetzungsverhältnisses gewährleistet werden, daß ein sehr feinfühliges Justieren der Sensorposition möglich ist.

Bei Bedarf kann das Bedienelement 28 noch durch eine entfernbare Schutzkappe abgedeckt werden, die einen versehentlichen Kontakt mit dem Bedienelement 28 und dementsprechend ungewollte Verstellbewegungen verhindert.

Wie aus Figur 3 ersichtlich ist, ergibt sich eine besonders flache Bauweise, wenn eine den Sensor 15 und die Gewindespindel 34 enthaltende gedachte Ebene 62 parallel zur Erstreckungsebene der Leiterbahnanordnung 52 bzw. der Leiterplatte 48 verläuft, wobei diese Ebenen zweckmäßigerweise so ausgerichtet sind, daß sie im wesentlichen parallel zu derjenigen (32) der vier längsseitigen Gehäuseflächen verlaufen, an der die Bedienelemente 28 vorgesehen sind. In Draufsicht auf diese längsseitige Gehäusefläche 32 gesehen kann der Gehäusekanal 24 seitlich versetzt liegen, so daß er sich außermittig längserstreckt und wenigstens teilweise in dem über Eck gehenden Übergangsbereich zweier aneinander angrenzender längsseitiger Gehäuseflächen vorgesehen sein kann, in dem sich eine größere Wandstärke des Rohrkörpers 3 realisieren läßt.

## Patentansprüche

1. Linearantrieb, mit einem Gehäuse (2), das einen Innenraum (6) enthält, in dem ein Antriebsteil (7) axial bewegbar angeordnet ist, mit wenigstens einem außerhalb des Innenraumes (6) an einer Längsführung (22) relativ zum Gehäuse (2) axial verlagerbar angeordneten Sensor (15) zur berührungslosen Erfassung mindestens einer Axialposition des Antriebsteils (7), und mit einer an dem Sensor (15) angreifenden und zu dessen axialer Positionierung relativ zum Gehäuse (2) dienenden Betätigungseinrichtung (27), die über ein von außen her zugängliches Bedienelement (28) verfügt, dadurch gekennzeichnet, daß das Bedienelement (28) im Bereich einer längsseitigen Seitenfläche (32) des Gehäuses (2) vorgesehen ist und über eine Getriebeeinrichtung (33) mit dem Sensor (15) in Verbindung steht.

2. Linearantrieb nach Anspruch 1, dadurch gekennzeichnet, daß das Bedienelement (28) als zu seiner Betätigung drehbares Element ausgeführt ist.

3. Linearantrieb nach Anspruch 2, dadurch gekennzeichnet, daß das Bedienelement (28) als drehbar gelagerter Radkörper ausgeführt ist.

4. Linearantrieb nach Anspruch 2 oder 3, dadurch gekennzeichnet, daß die Drehachse (36) des Bedienelementes (28) parallel zur Längsachse (23) des Gehäuses (2) verläuft.

5. Linearantrieb nach einem der Ansprüche 1 bis 4, dadurch gekennzeichnet, daß das Bedienelement (28) im Bereich der zugeordneten längsseitigen Gehäusefläche (32) zumindest teilweise versenkt in der Wandung des Gehäuses (2) angeordnet ist.

6. Linearantrieb nach einem der Ansprüche 1 bis 5, dadurch gekennzeichnet, daß die Getriebeeinrichtung (33) eine Gewindespindel (34) enthält.

7. Linearantrieb nach Anspruch 6, dadurch gekennzeichnet, daß die Gewindespindel (34) mit einem sensorfesten Körper (18) in Gewindeeingriff steht, der bezüglich dem Gehäuse (2) unverdrehbar aber längsbeweglich angeordnet ist, so daß ein Verdrehen der Gewindespindel (34) ein axiales Positionieren des Sensors (15) bewirkt.

8. Linearantrieb nach einem der Ansprüche 1 bis 7, dadurch gekennzeichnet, daß der Sensor (15) und die zugeordnete Getriebeeinrichtung (33) in einem Gehäusekanal (24) aufgenommen sind, der sich in Längsrichtung des Gehäuses (2) erstreckt.

9. Linearantrieb nach Anspruch 8, dadurch gekennzeichnet, daß der Gehäusekanal (24) umfangsseitig geschlossen ist und sich im Innern der Gehäusewandung erstreckt.

10. Linearantrieb nach einem der Ansprüche 1 bis 9, dadurch gekennzeichnet, daß sich das Bedienelement (28) in der Nähe eines axialen Endbereiches des Gehäuses (2) befindet.

11. Linearantrieb nach einem der Ansprüche 1 bis 10, dadurch gekennzeichnet, daß sich parallel zum Verstellweg des mindestens einen Sensors (15) eine gehäusefest fixierte Leiterbahnanordnung (52) erstreckt, mit der der Sensor (15) über Schleifkontakte (53) in Berührkontakt steht und die mit einer Auswerte- und/oder Steuereinrichtung (17) verbunden oder verbindbar ist.

12. Linearantrieb nach Anspruch 11, dadurch gekennzeichnet, daß an der Leiterbahnanordnung (52) erste Schnittetellenmittel (54) vorhanden sind, die sich lösbar mit die Verbindung zu einer Auswerte- und/oder Steuereinrichtung (17) herstellenden zweiten Schnittstellenmitteln (55) koppeln lassen.

13. Linearantrieb nach Anspruch 12, dadurch gekennzeichnet, daß das Gehäuse (2) seitlich im Bereich der Leiterbahnanordnung (52) eine Aussparung aufweist, über die die ersten Schnittstellenmittel (54) von außen her zugänglich sind.

14. Linearantrieb nach einem der Ansprüche 1 bis 13, dadurch gekennzeichnet, daß die Leiterbahnanordnung (52) Bestandteil einer am oder im Gehäuse (2) fixierten, sich entlang des Verstellweges des mindestens einen Sensors (15) erstreckenden Leiterplatte (48) ist.

15. Linearantrieb nach einem der Ansprüche 1 bis 14, dadurch gekennzeichnet, daß sich die Leiterbahnanordnung (52) auf der dem Innenraum (6) des Gehäuses (2) zugewandten Seite des mindestens einen Sensors (15) befindet und dabei dem Sensor (15) zugewandt ist.

16. Linearantrieb nach einem der Ansprüche 1 bis 15, dadurch gekennzeichnet, daß Sicherungsmittel (45) zur Fixierung der eingestellten Axialposition des mindestens einen Sensors (15) vorgesehen sind, die insbesondere mit dem Bedienelement (28) zusammenarbeiten.

17. Linearantrieb nach einem der Ansprüche 1 bis 16, dadurch gekennzeichnet, daß mehrere mit jeweils mindestens einem Sensor (15) zusammenarbeitende und unabhängig voneinander bedienbare Betätigungseinrichtungen (27) vorhanden sind.

18. Linearantrieb nach Anspruch 17, gekennzeichnet durch zwei entgegengesetzten axialen Endbereichen des Gehäuses (2) zugeordnete und mit jeweils einem Sensor (15) zusammenarbeitende Betätigungseinrichtungen (27).

19. Linearantrieb nach einem der Ansprüche 1 bis 18, gekennzeichnet durch eine am Antriebsteil (7) angeordnete und insbesondere von einer Permanentmagneteinrichtung gebildete Schalteinrichtung (16) zur Erzeugung eines den mindestens einen Sensor (15) berührungslos erregenden Schaltsignales.
